# EUROPÄISCHE PATENTSCHRIFT

(11) **EP 0 634 358 B1**
(45) Veröffentlichungstag und Bekanntmachung des Hinweises auf die Patenterteilung: **15.01.1997**
(21) Anmeldenummer: 94109471.6
(22) Anmeldetag: 20.06.1994
(51) Int. Cl.: C22C 19/07, C01B 3/00, C22C 16/00, C01B 6/24

(54) **Intermetallische Verbindung und ihre Verwendung**
Intermetallic compound and its use
Composé intermétallique et sa mise en oeuvre

(30) Priorität: 17.07.1993 DE 4324054
(43) Veröffentlichungstag der Anmeldung: 18.01.1995
(73) Patentinhaber: Forschungszentrum Karlsruhe GmbH, 76133 Karlsruhe (DE)
(72) Erfinder: Penzhorn, Ralf-Dieter, Dr., D-76646 Bruchsal (DE); Rivkis, Leo, 12308 Moskau (RU); Perevezentsev, Alexandre, 115569 Moskau (RU)
(74) Vertreter: Gottlob, Peter, Dipl. Ing.

(56) Entgegenhaltungen:
- DE-A- 3 033 503
- FR-A- 2 447 976
- US-A- 4 160 014

## Beschreibung

Die Erfindung betrifft eine Legierung nach Anspruch 1 und ihre Verwendung nach Anspruch 3.

In der Veröffentlichung mit dem Titel: "Evaluation of ZrCo and other Getters for Tritium Handling and Storage" von R. D. Penzhorn et al Journal of Nuclear Materials 170 (1990) 217-231, werden in einer Tabelle 26 Metalle und intermetallische Verbindungen, die für eine reversible Wasserstoffspeicherung geeignet sind, miteinander verglichen. Der Veröffentlichung ist zu entnehmen, daß die Wasserstoffaufnahme von intermetallischen Verbindungen im allgemeinen größer ist als die Summe der Speicherkapazität der Verbindungskomponenten. Die intermetallischen Verbindungen ZrCo, ZrNi und LaNi₅₋ₓMnₓ werden für die Speicherung des Wasserstoff-Isotops Tritium als besonders geeignet angesehen.

Um Tritium mit hoher Effizienz reversibel speichern zu können, soll das Metall oder die intermetallische Verbindung bei Zimmertemperatur möglichst viel Tritium aufnehmen und zugleich im beladenen Zustand einen möglichst geringen Gasdruck aufweisen; andererseits soll Tritium aus dem beladenen Metall oder der beladenen intermetallischen Verbindung bei einer höheren Temperatur, die jedoch 500°C nicht überschreiten soll, möglichst vollständig desorbierbar sein. Diese Bedingung ist bei den erwähnten intermetallischen Verbindungen erfüllt.

Insbesondere ZrCo bildet bei Zimmertemperatur ein sehr stabiles Hydrid bzw. Tritid. Es ist sowohl im aktivierten Zustand (in Pulverform z. B. mit einer Korngröße von 1 bis 100 µm) als auch in Hydridform (als ZrCoHₓ mit x ≤ 3) wenig pyrophor und weist eine vergleichsweise niedrige Dehydrierungstemperatur auf. Bereits bei etwa 380°C wird ein Wasserstoffdruck von 1 bar erreicht. Bei mäßigen Temperaturen reagiert ZrCo nur langsam mit gasförmigen Verunreinigungen wie CO, CO₂, CH₄, N₂, O₂ etc., ohne daß dabei eine Passivierung der wasserstoffspeichernden Oberfläche zu verzeichnen wäre. Die Hydrierung führt bei ZrCo nur zu einem geringen Schwellen. Zu den Nachteilen dieser wasserstoffspeichernden intermetallischen Verbindung zählt eine gewisse Phasenunbeständigkeit durch Disproportionierung, die mit schneller Kinetik bei Temperaturen über 350°C und gleichzeitig hohen Wasserstoffdrücken abläuft.

In der Tabelle der eingangs genannten Veröffentlichung ist außerdem die intermetallische Verbindung TiCo aufgeführt, die mit 0,4 bis 1,6 Gramm-Atome Wasserstoff pro Mol Verbindung eine mäßige Speicherkapazität aufweist und im folgenden nicht weiter erwähnt wird.

Die in der Tabelle angegebenen Werte wurden der Veröffentlichung "Hydrogen Absorption-Desorption Characteristics of Titanium-Cobalt-Manganese Alloys" von Y. Osumi et al, J. Less-Common Met., 72 (1980) 79-86 entnommen. In dieser Veröffentlichung werden die Eigenschaften von TiCo in Bezug auf die Wasserstoffspeicherung beschrieben. TiCo erschient den Autoren für diesen Zweck nicht optimal geeignet, weshalb sie abgewandelte Legierungen (Ti₁₋ₓAₓCo und TiCo₁₋ₓAₓ mit A = Cr, Cu, Fe, La, Mn, Ni und V) untersuchten. Die Legierung TiCo₁₋ₓMnₓ mit x = 0 bis 0,5, insbesondere mit x = 0,5, wird eingehend beschrieben. Alle in der Veröffentlichung beschriebenen Legierungen weisen bei Zimmertemperatur einen hohen Dissoziationsdruck auf und sind daher zumindest für die reversible Speicherung von Tritium weniger gut geeignet.

Ein Verfahren zur Herstellung einer titanenthaltenden Wasserstoffspeicherlegierung auf Basis der Lavesphasen AB₂ ist aus der DE 34 11 011 A1 bekannt. Hier stellt A Titan und gegebenenfalls zumindest ein weiteres Element vom Anfang der Übergangsmetallreihe und B ein Element oder mehrere Elemente aus der Menge der übrigen Übergangsmetalle dar.

Kompliziertere Wasserstoffspeichermaterialien werden in einer Reihe von weiteren Druckschriften beschrieben. In der DE 30 23 770 A1, in der DE 30 31 471 A1 und in der DE 31 51 712 C1 wird ein Wasserstoffspeichermaterial der allgemeinen Formel Ti₁₋ₐ ZrₐMn₂₋ₓCr_{x-y}(V_{z}Ni_{1-z})_{y} vorgeschlagen, bei dem Nickel ganz oder teilweise durch Kobalt ersetzt sein kann. In der EP 0 410 935 A1 wird die Herstellung vanadiumreicher Wasserstoffspeicherlegierungen beschrieben. Die Herstellung der Wasserstoffspeicherlegierung (Ti_{z-x}ZrₓV_{4-y}Ni_{y})_{1-z}Cr_{z} ist aus der EP 0 450 112 A1 bekannt. Die EP 0 506 084 A1 befaßt sich mit Wasserstoffspeicherlegierungen der allgemeinen Formel ZrMn_{w}VₓM_{y}Ni_{z}, wobei M Kobalt oder Eisen darstellt.

Aufgabe der Erfindung ist es, eine aus wenigen Komponenten bestehende intermetallische Verbindung anzugeben, die ebenso günstige Eigenschaften wie das eingangs erwähnte ZrCo aufweist, jedoch phasenbeständiger ist. Die intermetallische Verbindung soll sich insbesondere zur sicheren und verlustarmen reversiblen Speicherung und Handhabung von Wasserstoff eignen, der ganz oder teilweise aus dem Isotop Tritium besteht.

Die Aufgabe wird durch die im ersten Patentanspruch beschriebene intermetallische Verbindung gelöst. Eine bevorzugte Zusammensetzung der intermetallischen Verbindung ist in Anspruch 2 angegeben. Die Verwendung der intermetallischen Verbindung ist Gegenstand der Ansprüche 3 und 4.

Das System Zr_{1-y}Ti_{y}Co/Wasserstoff ist wesentlich phasenbeständiger als ZrCo/Wasserstoff. Eine hohe Phasenstabilität ist insbesondere Voraussetzung für ein reversibles Wasserstoffspeichermaterial, in dem Wasserstoff mehrfach gespeichert und unter Anwendung von Wärme wieder desorbiert wird. Bei phasenunbeständigen Materialien nimmt die Fraktion des nur schwer zurückgewinnbaren Wasserstoffs und damit das Wasserstoff-Inventar im desorbierten Zustand im Lauf der Betriebszeit allmählich zu. Die Menge an reversibel speicherbarem Gas vermindert dert sich dadurch beständig. Die Phasenunbeständigkeit stellt vor allem bei der Speicherung von radioaktivem Tritium einen gravierenden Nachteil dar, denn nicht mehr gebrauchsfähige Speichersysteme müssen als radioaktiver Abfall entsorgt werden.

Die erfindungsgemäße intermetallische Verbindung kann hergestellt werden, indem die pulverförmigen, im vorgegebenen Verhältnis eingewogenen Komponenten grob gemischt und im Vakuum oder unter Edelgas aufgeschmolzen werden. Zur besseren Homogenisierung kann die erstarrte intermetallische Verbindung zerkleinert und unter den angegebenen Bedingungen erneut aufgeschmolzen werden. Dieser Vorgang wird gegebenenfalls mehrfach wiederholt.

Die erfindungsgemäße intermetallische Verbindung weist insbesondere gegenüber den bisher verwendeten oder vorgesehenen Speichermaterialien für Tritium wesentliche Vorteile auf:

Durch wiederholte Sorption/Desorption aktiviertes Zr_{1-y}Ti_{y}Co-Pulver reagiert rasch mit Wasserstoff, z. B. Tritiumgas, unter Bildung eines Hydrids (Tritids) mit niedrigem Dissoziationsdruck bei Zimmertemperatur.

Der Dissoziationsdruck von 1 bar des Zr_{1-y}Ti_{y}Co-Tritids wird bei der vergleichsweise niedrigen Temperatur von 325°C erreicht. Eine möglichst niedrige Freisetzungstemperatur ist wichtig, um die Permeationsverluste eines technischen Tritiumspeicherbehälters während der langen Aufheizphase niedrig zu halten.

Die pulverisierte intermetallische Verbindung Zr_{1-y}Ti_{y}Co ist auch im Hydrid- oder Tritid-Zustand wesentlich weniger pyrophor als die bisher zur Tritiumspeicherung vorgesehenen Verbindungen. Ein wenig pyrophorer Charakter ist von ausschlaggebender Bedeutung für die Einhaltung hoher Sicherheitsstandards, wie sie insbesondere bei der Handhabung eines radioaktiven Gases wie Tritium erforderlich sind.

Die Erfindung wird im folgenden anhand von Vergleichstabellen und Diagrammen näher erläutert.

Es zeigen
Fig. 1 die Druck/Konzentration-Isotherme des Systems Zr_{0,8}Ti_{0,2}Co/H₂ bei der Temperatur 25°C;
Fig. 2 einen thermogravimetrischen Vergleich der Oxidationsraten in Luft (Gewichtszunahme) verschiedener Wasserstoffspeichermaterialien in Abhängigkeit von der Temperatur;
Fig. 3 einen Vergleich der Disproportionierungsgeschwindigkeit verschiedener Wasserstoffspeichermaterialien bei 450°C und einem konstanten Wasserstoffdruck von 101 kPa.

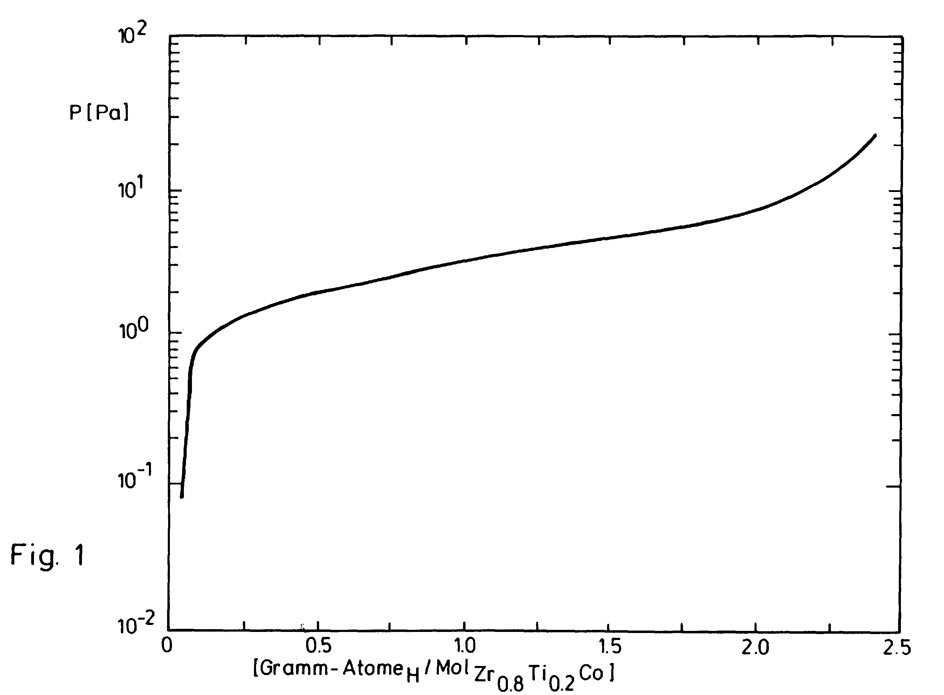

In Fig. 1 ist am Beispiel von Zr_{0,8}Ti_{0,2}Co das Verhältnis Gramm-Atome aufgenommenen Wasserstoffs [Gramm-Atome_{H}] pro Mol intermetallische Verbindung [Mol{Zr_{0,8}Ti_{0.2}Co}] gegen den Gleichgewichtsdruck des Systems aufgetragen. Der geringe Anstieg der Kurve im Bereich zwischen 1 und 10 Pa zeigt, daß die intermetallische Verbindung bereits bei geringem Wasserstoffdruck über 1,2 Mol entsprechend 2,4 Gramm-Atome Wasserstoff pro Mol Verbindung aufnimmt.

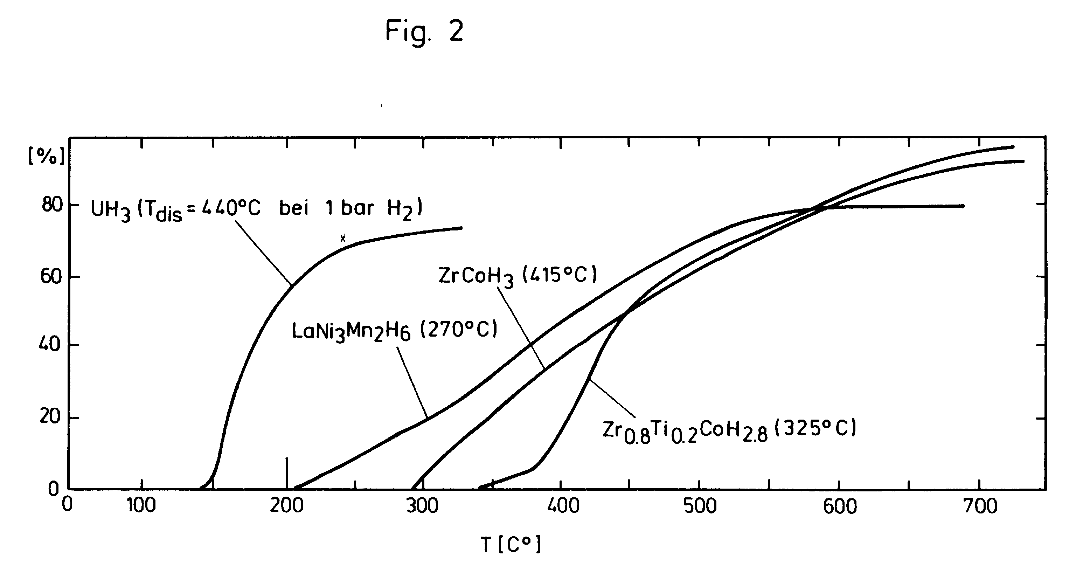

In Fig. 2 ist ein thermogravimetrischer Vergleich der Oxidationsraten in Luft für verschiedene Wasserstoffspeichermaterialien in vollhydriertem Zustand in Abhängigkeit von der Temperatur graphisch dargestellt. Die Oxidationsrate wurde durch die Gewichtszunahme ermittelt. Die Proben waren 50 mg schwer; sie wurden in Luft bei einem Temperaturanstieg von 5°C/min aufgeheizt. Die Temperatur in [°C] ist gegen die Gewichtszunahme nahme in [%], bezogen auf den volloxidierten Zustand (UO₃, Zr_{1-y}Ti_{y}CoO₃ etc.) aufgetragen. Die Kurve für Zr_{0,8}Ti_{0,2}Co liegt zu einem großen Teil unterhalb der Kurve für das nächstgünstige Speichermaterial ZrCo. In Klammer sind für alle Materialien die Dissoziationstemperaturen [T_{dis}] angegeben. Bei der Dissoziationstemperatur steht das mit Wasserstoff beladene Speichermaterial mit einem Wasserstoffdruck von 1 bar im Gleichgewicht. Aus der Kurve für Zr_{0,8}Ti_{0,2}CoHₓ wird deutlich, daß bei der Dissoziationstemperatur dieses Materials keine meßbare Oxidation erkennbar ist.

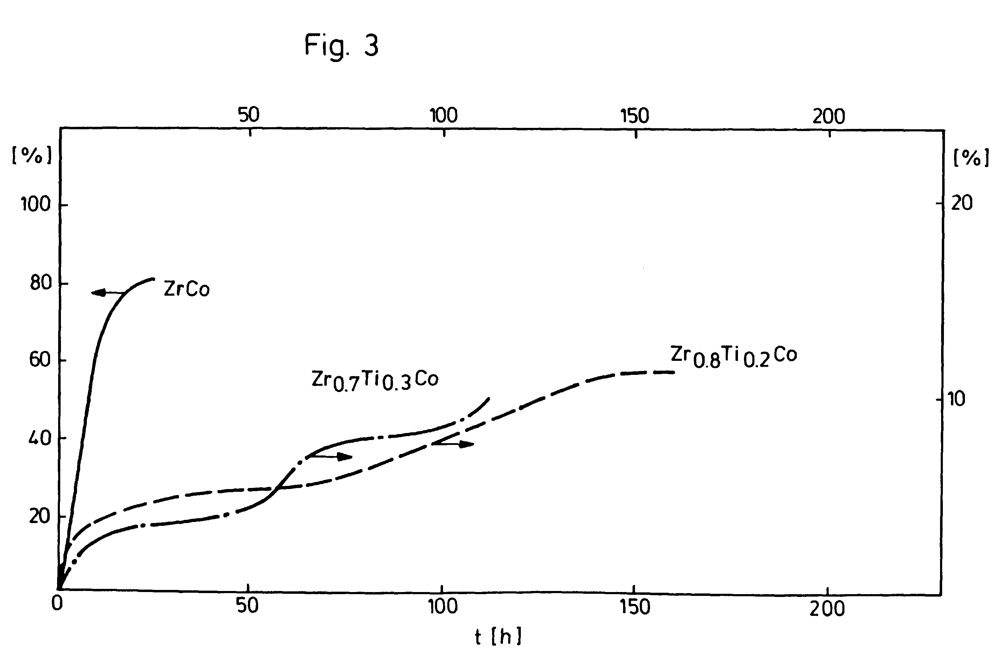

In Fig. 3 ist die Disproportionierungsgeschwindigkeit bei 450°C und einem konstanten Wasserstoffdruck von 101 kPa - gemessen in [%] des disproportionierten Anteils bezogen auf die Gesamtmenge - gegen die Zeit aufgetragen. Die Disproportionierungsgeschwindigkeit ist ein Maß für die Phasenstabilität des Speichermaterials. Der bis 1,0 reichende Maßstab auf der linken Abszisse bezieht sich auf die Verbindung ZrCo; der bis 0,2 reichende Maßstab auf der rechten Seite bezieht sich auf die erfindungsgemäßen Verbindungen Zr_{0,8}Ti_{0,2}Co bzw. Zr_{0,7}Ti_{0,3}Co. Die an den Kurven angebrachten Pfeile weisen auf den zugehörigen Maßstab hin. Wie sich aus dem Vergleich mit ZrCo ergibt, sind die erfindungsgemäßen Verbindungen wesentlich phasenstabiler.

In der folgenden Tabelle 1 werden Eigenschaften verschiedener Speichermaterialien im Hinblick auf die reversible Speicherung von Tritium einander gegenübergestellt.

**Tabelle 1**

| Material | Gleichgewichtsdruck bei 20 °C [Pa] | Kapazität [cm³_{H2}/g] | T_{dis} bei P_{H2} = 1bar [°C] | Disproportionierung bei T_{dis} | Reaktion mit Luft bei T_{dis} |
|---|---|---|---|---|---|
| U | 10⁻⁴ | 140 | 440 | keine | sehr rasch |
| ZrCo | 10⁻³ | 220 | 415 | rasch | rasch |
| LaNi₃Mn2 | 4 | 90 | 270 | langsam | mittel |
| (1) | 4 | 220 | 325 | nicht meßb | nicht meßb |
| (2) | (-) | 210 | 280 | nicht meßb | nicht meßb |

| | | | | | |
|---|---|---|---|---|---|
| (1): Zr_{0,8}Ti_{0,2}Co | | | | | |
| (2): Zr_{0,7}Ti_{0,3}Co | | | | | |

In der folgenden Tabelle 2 ist die Temperatur für verschiedene Speichermaterialien angegeben, bei der eine beschleunigte Reaktion mit Luft erfolgt.

**Tabelle 2**

| Material Hydride | Temperatur [°C] |
|---|---|
| UH₃ | 25 |
| LaNi₃Mn₂H_{3,5} | 200 |
| ZrCoH₃ | 290 |
| Zr_{0,8}Ti_{0,2}CoH₂ | 330 |
| Zr_{0,7}Ti_{0,3}CoH₂ | 340 |

## Patentansprüche

1. Intermetallische Verbindung der Zusammensetzung Zr_{1-y}Ti_{y}Co mit 0,1 < y < 1.

2. Intermetallische Verbindung nach Anspruch 1, wobei y Werte von 0,2 bis 0,3 annimmt.

3. Verwendung der intermetallischen Verbindung nach Anspruch 1 oder 2 zur reversiblen Speicherung von Wasserstoff.

4. Verwendung nach Anspruch 3, wobei der Wasserstoff das radioaktive Isotop Tritium enthält oder aus diesem besteht.

## Claims

1. Intermetallic compound of the composition Zr_{1-y}Ti_{y}Co with 0.1 < y < 1.

2. Intermetallic compound according to claim 1, wherein y assumes values of between 0.2 and 0.3.

3. Use of the intermetallic compound according to claim 1 or 2 for the reversible storage of hydrogen.

4. Use according to claim 3, wherein the hydrogen contains the radioactive isotope tritium or comprises same.

## Revendications

1. Composé intermétallique de composition :
Zr_{1-y}Ti_{y}Co avec 0,1 < y < 1

2. Composé intermétallique selon la revendication 1,
dans lequel y prend des valeurs allant de 0,2 à 0,3.

3. Utilisation du composé intermétallique selon la revendication 1 ou 2, en vue du stockage réversible de l'hydrogène.

4. Utilisation selon la revendication 3,
dans laquelle l'hydrogène renferme l'isotope radioactif le tritium ou consiste en celui-ci.
